# FASCICULE DE BREVET EUROPEEN

(11) **EP 0 712 661 B1**
(45) Date de publication et mention de la délivrance du brevet: **05.07.2000**
(21) Numéro de dépôt: 95402518.5
(22) Date de dépôt: 10.11.1995
(51) Int. Cl.: B01J 23/89, F23C 11/00

(54) **Procédé de combustion**
Verbrennungsverfahren
Combustion process

(30) Priorité: 15.11.1994 FR 9413739
(43) Date de publication de la demande: 22.05.1996
(73) Titulaire: INSTITUT FRANCAIS DU PETROLE, 92502 Rueil-Malmaison (FR)
(72) Inventeur: Euzen, Patrick, F-92500 Rueil Malmaison (FR); Tocoue, Eric, F-78400 Chatou (FR); Rebours, Stéphane, F-78400 Chatou (FR); Mabilon, Gil, F-78420 Carrieres sur seine (FR)

(56) Documents cités:
- EP-A- 0 125 565
- EP-A- 0 170 588
- EP-A- 0 326 845
- US-A- 3 870 455
- Fuel Processing Technology 47 (1996) pages 1, 8, et 9

## Description

La présente invention concerne un catalyseur d'oxydation non-sélective et son utilisation dans la combustion catalytique de méthane, de monoxyde de carbone, d'hydrogène ou de leurs mélanges.

La combustion conventionnelle, réalisée en présence d'une flamme, habituellement utilisée dans les procédés de combustion d'hydrocarbures, tels que le méthane, est un processus difficilement contrôlable. Elle se produit dans un domaine de concentrations air/hydrocarbure bien déterminé et conduit, outre à la formation de dioxyde de carbone et d'eau, à la production de polluants comme le monoxyde de carbone et les oxydes d'azote. La combustion catalytique produit peu de polluants tels que NOₓ et CO. De plus, l'introduction d'un catalyseur autorise un meilleur contrôle de l'oxydation totale dans un large domaine des valeurs du rapport air/hydrocarbure. Celles-ci peuvent se situer en dehors des limites d'inflammabilité de la combustion classique. On peut également mentionner qu'elle conduit à des dispositifs plus compacts et qu'elle permet de brûler une très grande variété de composés.

Ainsi que le décrivent notamment D.Reay dans "Catalytic Combustion: Current Status and Implications for Energy Efficiency in the Process Industries. Heat Recovery Systems & CHP, 13. n°5, pp 383-390, 1993" et D. Jones et S.Salfati dans " Rev. Gén. Therm. Fr. n°330-331, pp 4101-406, Juin-Juillet 1989", les applications de la combustion catalytique sont multiples : panneaux et tubes radiants, réchauds catalytiques, turbines à gaz, cogénération, brûleurs, manchons catalytiques pour tubes de vaporeformage, production de gaz chauds dans le domaine du chauffage par contact direct et réacteurs à plaques catalytiques. En raison de la sévérisation accélérée des normes sur les NOₓ émises par les procédés de combustion, la chambre de combustion catalytique peut remplacer avantageusement les brûleurs conventionnels qui sont à l'origine de teneurs élevées en NOₓ. Les conditions de fonctionnement - milieu très oxydant- d'une chambre de combustion catalytique sont très éloignées des applications de post-combustion automobile : traitement des gaz d'échappement des véhicules à essence fonctionnant à la richesse 1 avec une teneur élevée en NOₓ et traitement des gaz d'échappement des véhicules diesel avec une forte teneur en particules et en NOₓ. Ces différences capitales impliquent de rechercher des formulations de catalyseurs de combustion dédiées.

Les catalyseurs de combustion, sont généralement préparés à partir d'un substrat monolithique, en céramique ou en métal, sur lequel on dépose une fine couche de support constituée d'un ou plusieurs oxydes réfractaires de surface et de porosité supérieures à celles du substrat monolithique. Sur cet oxyde est dispersée la phase active composée essentiellement des métaux du groupe du platine.

La stabilité thermique, l'activité catalytique à basse température et la stabilité de l'activité catalytique constituent généralement les trois principaux critères de sélection du catalyseur.

Il existe des catalyseurs de combustion plus résistants à haute température. Dans certains procédés de combustion, les catalyseurs peuvent être soumis à des températures très élevées qui sont souvent supérieures à 1000°C. Mais, au cours de leur utilisation à ces températures élevées, il s'avère que les catalyseurs subissent une dégradation qui diminue leurs performances catalytiques. Le frittage du support ainsi que le frittage de la phase active et/ou son encapsulation par le support font partie des causes les plus couramment citées pour expliquer cette dégradation. Dans le cas de tels catalyseurs fonctionnant à haute température, la résistance thermique peut devenir le critère prédominant au détriment de l'activité catalytique. Les supports de ces catalyseurs sont généralement à base d'alumine. Il est connu de l'homme de l'art que l'on peut stabiliser efficacement la chute de surface spécifique par un dopant approprié. Les terres rares et la silice sont souvent cités parmi les stabilisants les plus performants de l'alumine. Les catalyseurs préparés par cette technique sont décrits entre autre dans le brevet US-A-4,220,559. Dans ce document, le catalyseur comprend des métaux du groupe du platine ou des métaux de transition déposés sur de l'alumine, un oxyde d'un métal choisi dans le groupe constitué par le baryum, le lanthane et le strontium et un oxyde d'un métal choisi dans le groupe constitué par l'étain, le silicium, le zirconium et le molybdène.

En outre, afin de limiter le frittage de la phase métallique active, il a été proposé d'ajouter divers stabilisants à base essentiellement d'oxydes de métaux de transition.

Ainsi, dans le brevet américain US-A- 4 857 499, le catalyseur comprend un support poreux dont le diamètre des pores est compris entre 150 et 300Å et dont la proportion en poids rapporté au substrat est de façon préférentielle comprise entre 50 et 200g/l, une phase active incluant au moins 10% en poids, rapporté au support poreux, d'un métal précieux choisi dans le groupe formé par le palladium et le platine; un premier promoteur incluant au moins un élément choisi dans le groupe constitué par le lanthane, le cérium, le praséodyme, le néodyme, le baryum, le strontium, le calcium et leurs oxydes dont la proportion en poids rapporté au support poreux est comprise entre 5 et 20%; un deuxième promoteur incluant au moins un élément choisi dans le groupe formé par le magnésium, le silicium et leurs oxydes dont la proportion en poids rapporté à la phase active est inférieure ou égale à 10% et un troisième promoteur incluant au moins un élément choisi dans le groupe constitué par le nickel, le zirconium, le cobalt, le fer et le manganèse et leurs oxydes dont la proportion en poids rapporté à la phase active est inférieure ou égale à 10%. En outre, ledit catalyseur peut être déposé sur un substrat monolithique appartenant au groupe formé par la cordierite, la mullite, l'alumine alpha, la zircone et l'oxyde de titane ; la proportion en poids de support poreux rapporté au volume de substrat étant comprise entre 50 et 200g/l.

Dans le brevet américain US-A-4,793,797, le catalyseur comprend un support inorganique choisi dans le groupe constitué par les oxydes, les carbures et les nitrures d'éléments appartenant aux groupes IIa, IIIa et IV de la classification périodique des éléments ou choisi dans le groupe constitué par La-β-Al₂O₃, Nd-β-Al₂O₃, Ce-β-Al₂O₃ ou Pr-β-Al₂O₃, au moins un métal précieux choisi dans le groupe constitué par le palladium, le platine, le rhodium et le ruthénium, et d'au moins un oxyde d'un métal de base sélectionné dans le groupe constitué par le magnésium, le manganèse, le cobalt, le nickel, le strontium, le niobium, le zinc, l'étain, le chrome et le zirconium tel que le rapport atomique du métal de base sur le métal précieux soit compris entre 0,1 et 10.

Ces catalyseurs présentent, pour certains, une durabilité accrue par rapport à la phase métallique active seule. Mais les dopants utilisés sont adaptés à des conditions de température très sévères qui peuvent dépasser 1000°C. Ils ne permettent pas de limiter efficacement la dégradation des performances du catalyseur intervenant à des températures modérées, qui peut avoir des causes diverses et différentes de celles à l'origine de la dégradation à des températures élevées.

Par ailleurs, il a été également proposé des catalyseurs de combustion à base d'hexaaluminates contenant du manganèse, présentant un bon compromis activité catalytique/stabilité thermique ainsi que décrit, notamment, dans le brevet américain US-A- 4 788 174. Le catalyseur d'oxydation ainsi proposé peut être représenté par la formule :

A_{1-z}C_{z}BₓAl_{12-y}O_{19-α},

dans laquelle
A est au moins un élément choisi dans le groupe formé par Ba, Ca et Sr avec (0,0≤ z ≤0,4);
B est au moins un élément choisi dans le groupe formé par Mn,Fe,Co,Ni,Cu et Cr avec (x≤ y ≤2x);
C est K et/ou Rb; et
α = 1-1/2 {X--z (X--Y) + xZ --3Y} où X, Y, Z représentent respectivement les valences des éléments A, C et B.

De tels catalyseurs s'avèrent toutefois présenter une activité à basse température insuffisante pour répondre aux exigences d'un procédé de combustion. Afin de remédier à cet inconvénient, il a été proposé d'ajouter un métal précieux à de tels catalyseurs, ainsi que décrit, notamment, dans le brevet américain US-A- 4 959 339. Le catalyseur ainsi proposé est représenté par la formule:

A_{1-z}C_{z}BₓDᵤAl_{12-y-u}O_{19-α}

dans laquelle
A est au moins un élément choisi dans le groupe formé par Ba, Ca et Sr avec (0,0≤ z ≤0,4);
B est au moins un élément choisi dans le groupe formé par Mn, Fe, Co, Ni, Cu et Cr avec (x≤ y ≤2x);
C est au moins un élément choisi dans le groupe formé par K, Rb et les terres rares;
D est au moins un élément choisi dans le groupe formé par Au, Ag, Pd, Pt et autre métal précieux du groupe du platine avec x+u≤4; et
α = 1-1/2 {X--z (X--Y) + xZ + uU--3y- 3u} où X, Y, Z et U représentent respectivement les valences des éléments A, C, B et D.

Ces catalyseurs présentent, pour certains, une activité à basse température accrue par rapport à un catalyseur sans phase métallique.

Il a été également proposé de juxtaposer plusieurs catalyseurs différents dans un réacteur à étages catalytiques; les premiers catalyseurs étant plus spécifiquement dédiés à l'amorçage de la réaction de combustion, les suivants servant à stabiliser la réaction de combustion à haute température, le nombre d'étages (ou de zones) catalytiques étant ajusté en fonction des conditions imposées par l'application envisagée. Ainsi sont connus les systèmes suivants:
1^{ère} zone catalytique: Pd et Pt et NiO; et 2^{ème} zone catalytique: Pt et Pd; par exemple, ainsi que décrit dans la demande de brevet européen EP-A-198 948.
1^{ère} zone catalytique: Pd et/ou Pt; 2^{ème} zone catalytique: Sr_{0.8}La_{0.2}MnAl₁₁O_{19-α} et 3^{ème} zone catalytique:Sr_{0.8}La_{0.2}MnAl₁₁O_{19-α} ; par exemple, ainsi que décrit dans la demande de brevet japonais JP-A-04/197 443.
1^{ère} zone catalytique: Pd et (Pt ou Ag); 2^{ème} zone catalytique:Pd et (Pt ou Ag); et 3^{ème} zone catalytique: pérovskite ABO₃ ou oxyde de métal du groupe V(Nb ouV), du groupe VI (Cr) ou du groupe VIII (Fe, Co, Ni) ; par exemple, ainsi que décrit dans les demandes de brevet international WO-A-92/9848 et WO-A-92/9849.

Malgré les nombreux travaux de perfectionnement déjà réalisés, il reste intéressant de rechercher des catalyseurs ayant une activité et une stabilité accrues notamment à basse température. En effet, les solutions proposées telles que les formulations à base d'hexaaluminates dopées par un métal précieux ou la mise en oeuvre de différentes formulations dans un réacteur à plusieurs étages catalytiques ne résolvent pas le problème de stabilité de la phase active à basse température également responsable de la dégradation des performances. Parmi les causes envisagées pour cette dégradation des performances à basse température, le frittage et/ou l'empoisonnement de la phase métallique ainsi que la modification de l'état d'oxydation de la phase active font partie de celles les plus couramment citées.

On connaît par ailleurs, selon le brevet européen EP-B-27069, des catalyseurs pour le traitement des gaz d'échappement de moteur à combustion interne comportant du fer et du cérium associés à des métaux du groupe du platine déposés sur un oxyde inorganique réfractaire.

De même, le document EP-A- 0 125 565 décrit des catalyseurs utilisables pour la conversion simultanée des hydrocarbures, du monoxyde de carbone et des oxydes d'azote dans les gaz d'échappement de moteurs à combustion interne, et leur préparation. Ces catalyseurs comprennent du cérium, du zirconium et au moins un métal choisi parmi le fer et le nickel, en général en des proportions de 5 à 30 g de CeO₂, de 1 à 6 g de ZrO₂, de 0 à 10 g de Fe₂O₃, de 0 à 10 g de NiO, avec Fe₂O₃ + NiO de 0,5 à 15 g, au moins un métal choisi parmi le platine, le palladium et le rhodium, à raison de 0,01 à 10 g, et éventuellement au moins un métal choisi parmi le néodyme, le lanthane et le praséodyme, chacun à raison de 0 à 10 g, et de 50 à 200 g d'alumine active, ces quantités étant rapportées à 1 litre de catalyseur.

Les travaux de recherche menées par la demanderesse l'ont conduite à découvrir que, de façon surprenante, des catalyseurs contenant à la fois du fer, du cérium et des métaux précieux, tout en remédiant aux inconvénients présentés par les catalyseurs de l'art antérieur, s'avèrent présenter une excellente activité ainsi qu'une stabilité remarquable au cours du temps.

La présente invention propose donc un catalyseur de combustion caractérisé en ce qu'il comprend un substrat monolithique, un support poreux à base d'oxyde inorganique réfractaire et une phase active constituée de cérium, de fer et d'au moins un métal choisi dans le groupe formé par le palladium et le platine; la teneur en support poreux étant comprise entre 100 et 400 g par litre de catalyseur; la teneur en cérium étant comprise entre 0,3 et 20% en poids par rapport au support poreux; la teneur en fer étant comprise entre 0,01 et 3,5% de fer en poids par rapport au support; et la teneur en palladium et/ou platine étant comprise entre 3 et 20 g par litre de catalyseur.

Selon des caractéristiques préférées du catalyseur de la présente invention, la teneur en support poreux est comprise entre 200 et 350 g par litre de catalyseur; la teneur en cérium est comprise entre 2 et 15 % en poids par rapport au support poreux; la teneur en fer est comprise entre 0,1 et 2% de fer en poids par rapport au support; et la teneur en palladium et/ou platine étant comprise entre 5 et 15 g par litre de catalyseur.

La teneur en support poreux du catalyseur selon l'invention varie de façon préférentielle entre 100 et 400 g par litre de catalyseur et de façon encore plus préférentielle entre 200 et 350 g/l. Si la teneur en support poreux est inférieure à 100g, l'activité catalytique n'est pas suffisante. Inversement, une teneur en support poreux supérieure à 400 g/l est également néfaste pour l'activité catalytique car elle se traduit par un bouchage des canaux du monolithe.

Dans les catalyseurs utilisés de l'invention, le substrat monolithique peut consister en un monolithe à structure cellulaire en céramique ou métallique (enroulement, empilement de feuillards métalliques ou encore association de fibres métalliques ou de fils métalliques sous la forme d'un monolithe à structure fibreuse). La céramique employée peut être de la mullite, de la cordierite, de l'alumine α, de la zircone, du titanate d'alumine, du carbure de silicium, du nitrure de silicium ou leurs mélanges. Ces substrats monolithiques sont produits par extrusion. Les alliages métalliques employés doivent présenter de préférence des propriétés réfractaires. Ils peuvent par exemple être composés de fer, chrome, d'aluminium et de cérium ou d'yttrium tels que l'acier Gilphal 135® de la société Imphy. Le substrat métallique peut être préalablement soumis à un traitement oxydant à une température comprise entre 700°C et 1200°C, de préférence entre 800 et 1000°C. La densité de cellules, c'est à dire le nombre de cellules par section de monolithe, est généralement comprise entre 50 et 600 cellules par pouces-carrés (7.75 à 93 cellules par cm²).

Les catalyseurs utilisés dans l'invention apportent des performances améliorées spécialement dans les procédés de combustion catalytique d'hydrocarbures, de monoxyde de carbone, d'hydrogène ou de leurs mélanges. Mais ils sont également utilisables dans tous les procédés d'oxydation catalytique opérant à des températures élevées.

La préparation et la mise en forme du support peuvent constituer la première étape de la préparation de ces catalyseurs. Le support à base d'oxyde réfractaire mis en oeuvre selon l'invention est généralement choisi dans le groupe formé par les oxydes réfractaires des métaux des Groupes IIa, IIIa, IVa et IVb de la classification périodique des éléments et leurs mélanges en toutes proportions.

Le plus souvent, l'oxyde d'aluminium de formule générale Al₂O₃, nH₂O est utilisé. Sa surface spécifique est comprise entre 10 et 500 m²/g. Cet oxyde dans lequel n est compris entre 0 et 0,6, est classiquement obtenu par déshydratation contrôlée d'hydroxydes dans lesquels 1≤n≤3. Ces hydroxydes sont eux-mêmes préparés par précipitation en milieu aqueux de sels d'aluminium par des bases ou des acides. Les conditions de précipitation et de mûrissement déterminent plusieurs formes d'hydroxydes dont les plus communs sont la boehmite (n=1), la gibbsite et la bayerite (n=3). En fonction des conditions hydrothermiques de traitement, ces hydroxydes donnent plusieurs oxydes ou alumines de transition. On dénombre ainsi les formes alpha, delta, éta, gamma, kappa, khi, rhô et théta. Celles-ci se différencient essentiellement par l'organisation de leur structure cristalline. Lors de traitements thermiques, ces différentes formes sont susceptibles d'évoluer entre elles, selon une filiation complexe qui dépend des conditions opératoires de traitement. La forme alpha qui présente une surface spécifique très faible est stable à plus haute température. On préfère utiliser des alumines présentant une surface spécifique comprise entre 20 et 250 m²/g et en particulier l'alumine gamma et/ou delta.

Afin d'augmenter la stabilité thermique de ce ou ces oxydes, divers composés peuvent être incorporés au support poreux, soit directement sous la forme de pigments, soit sous la forme de composés précurseurs d'oxydes. Les terres rares, les métaux alcalino-terreux et la silice qui sont parmi les stabilisants les plus performants de l'alumine peuvent être avantageusement incorporés au support poreux.

D'une manière générale, ces supports mis en oeuvre selon la présente invention peuvent avoir avantageusement été traités, ainsi qu'il est bien connu de l'homme de l'art, par des agents porogènes tels que ceux à base de cellulose, naphtaline, gommes naturelles ou polymères synthétiques, de façon à leur conférer des propriétés de porosité désirée.

La teneur en métal du groupe constitué par le platine et le palladium du catalyseur selon l'invention varie entre 3 et 20 g par litre de catalyseur et de préférence entre 5 et 15 g/l. Si la teneur en métal précieux est inférieure à 3 g, l'activité catalytique n'est pas suffisamment élevée pour satisfaire aux exigences d'un procédé de combustion. A l'opposé, lorsque la teneur en métal précieux dépasse 20 g, une augmentation ultérieure de la teneur en métal précieux ne permet pas d'accroître de façon significative l'activité catalytique. Selon l'invention, le palladium est préféré. Toutefois, le platine peut être avantageusement utilisé pour un étage de combustion fonctionnant à des températures relativement basses, par exemple à environ 500°C, ou en combinaison avec le palladium.

La présence de fer et de cérium déposés simultanément sur le ou les oxydes inorganiques réfractaires permet de renforcer l'activité et la stabilité du catalyseur au cours du temps.

La teneur en fer des catalyseurs selon l'invention est comprise entre 0,01 et 3,5% en poids par rapport au support et plus particulièrement entre 0,1 et 2%. Si la teneur en fer dépasse 3,5%, le fer alors peut accélérer fortement la chute de surface spécifique du support poreux à base d'alumine.

La teneur en cérium des catalyseurs de la présente invention est comprise entre 0,3 et 20 % en poids par rapport au support, et de façon préférentielle entre 2 et 15 % en poids par rapport au support poreux. Si la teneur en cérium est inférieure à 0,3 %, celui-ci ne promeut pas de façon satisfaisante l'activité catalytique. Inversement, lorsque la teneur en cérium dépasse 20% en poids par rapport au support poreux, une augmentation ultérieure de la teneur en cérium ne permet pas d'accroître de façon significative l'activité catalytique.

La préparation de ces catalyseurs déposés sur un substrat consiste en une étape d'enduction au cours de laquelle le substrat est plongé dans une suspension contenant les précurseurs des composants du catalyseur, puis est séché et calciné après évacuation de l'excès de ladite suspension. Une deuxième étape dite d'imprégnation permet de déposer les métaux actifs. Pour cela, on met en contact le substrat enduit avec une ou plusieurs solutions du des précurseurs des métaux actifs. Après avoir été éventuellement égoutté, le substrat ainsi enduit et imprégné est séché et subit un traitement thermique.

Le dépôt de fer et de cérium sur le support de catalyseur de la présente invention est réalisable selon toutes les techniques connues de l'homme de l'art et peut intervenir à tout moment lors de la préparation du catalyseur. Ils peuvent être introduits sous forme de composés solides (oxydes, hydroxydes, carbonates, hydroxycarbonates ou encore sels insolubles) ou de composés solubles (nitrates, sulfates, chlorures, alcoolates) dans la suspension d'enduction, et/ou pré-imprégnés sur l'un des constituants de la suspension d'enduction, et/ou déposés sur le support poreux avant l'imprégnation des métaux, et/ou coimprégnés avec les métaux selon la technique envisagée. Dans le cas où le fer et le cérium sont déposés après la mise en forme des alumines contenant éventuellement d'autres métaux, les méthodes employées peuvent être par exemple l'imprégnation à sec, l'imprégnation par excès de solution ou l'échange ionique. Sur un support déjà mis en forme, une méthode préférée d'introduction de cet élément additionnel est l'imprégnation en milieu aqueux en utilisant un excès de solution. Afin d'éliminer le solvant d'imprégnation, cette imprégnation est suivie d'un séchage et d'une calcination sous air à une température comprise entre 300 et 900°C.

Selon un mode de mise en oeuvre particulier, on imprègne successivement le support avec une solution contenant des composés contenant du fer et du cérium puis avec une ou des solutions contenant des composés des métaux précieux que l'on souhaite introduire.

Comme composés du fer et du cérium que l'on peut mettre en oeuvre, on citera notamment les sels de fer et de cérium et plus particulièrement le nitrate ferrique, le citrate de fer ammoniacal, le chlorure ferrique et le nitrate céreux, l'acétate céreux, le chlorure céreux et le nitrate cérique ammoniacal.

Les précurseurs des métaux du groupe formé par le platine et le palladium sont ceux classiquement utilisés pour la préparation des catalyseurs, en particulier les chlorures, les complexes chlorés, les nitrates, les complexes amminés, les acétylacétonates. A titre d'exemple, on peut citer l'acide chloroplatinique, le chlorure de palladium, le chlorure de platine tétrammine, le dinitrodiamminoplatine et le nitrate de palladium.

La profondeur d'imprégnation peut être avantageusement réglée par l'utilisation de méthodes connues de l'homme de l'art et en particulier par ajout dans la solution des métaux précieux d'une certaine quantité d'acide minéral ou organique. On utilise couramment les acides nitrique, chlorhydrique et fluorhydrique ou les acides acétique, citrique et oxalique.

Les catalyseurs utilisés dans l'invention apportent des performances améliorées spécialement dans les procédés de combustion catalytique de méthane, de monoxyde de carbone, d'hydrogène ou de leurs mélanges. Mais ils sont également utilisables dans tous les procédés catalytiques nécessitant des températures élevées.

Par ailleurs, les réacteurs de combustion catalytique peuvent comporter un ou plusieurs étages catalytiques dont les formulations peuvent être différentes. Les catalyseurs de la présente invention peuvent être utilisés dans des réacteurs à un étage ou à plusieurs étages catalytiques. Dans ce dernier cas, ils sont utilisés de façon préférentielle dans le (ou les) étage(s) catalytique(s) qui fonctionne(nt) à des températures inférieures à 1100°C.

Les exemples suivants illustrent l'invention sans toutefois la limiter:

Les divers précurseurs employés sont des produits commerciaux de PROLABO®. La composition élémentaire des catalyseurs a été déterminée par fluorescence X (PHILIPS PW 1480®).

### EXEMPLE 1 : Préparation d'un catalyseur C1 utilisé dans l'invention.

On dépose du fer et du cérium sur de l'alumine gamma par imprégnation de 700g d'alumine par une solution aqueuse de nitrate céreux et de nitrate ferrique. Cette solution contient l'équivalent de 45g d'oxyde de cérium (CeO₂) et de 15 g d'oxyde de fer (Fe₂O₃).

L'alumine imprégnée est ensuite séchée à 150°C puis calcinée sous air à 600°C durant 3 heures.

On prépare une suspension d'enduction à partir de deux litres d'eau désionisée additionnée de l'équivalent de 12g d'acide nitrique, 600g d'alumine de type gamma préalablement imprégnée de fer et de cérium et de 140 g de pseudo-boehmite à 72% de matière sèche. Cette suspension est broyée de telle manière que la taille des particules soit inférieure à 10 microns.

Dans une première étape dite d'enduction, un monolithe céramique (cordiérite) de 0,84 litre présentant 62 cellules par cm² (400 cellules par pouce-carré) est immergé dans la suspension, puis égoutté avant que l'excès de suspension soit éliminé par soufflage. Le support est ensuite séché puis calciné dans un four dont la température est maintenue à 600°C pendant deux heures. Ces étapes d'immersion, soufflage et calcination sont répétées une deuxième fois afin de déposer l'équivalent de 120g de support poreux par litre de catalyseur (substrat).

Dans une seconde étape dite d'imprégnation, le monolithe enduit est immergé dans une solution de nitrate de palladium de telle manière que la quantité de palladium fixée après séchage et calcination à 500°C pendant deux heures soit de 3% en poids de palladium par rapport au support poreux, soit encore exprimé par rapport au catalyseur : 3,6 g de palladium par litre de catalyseur.

Ce catalyseur C1 ainsi préparé contient en poids rapporté au support poreux 4,13% de cérium, 1,31% de fer et 3% de palladium.

### EXEMPLE 2 (comparatif): Préparation d'un catalyseur C2

Afin de montrer l'effet du cérium sur l'activité catalytique, on prépare une suspension d'enduction à partir de deux litres d'eau désionisée additionnée de l'équivalent de 12g d'acide nitrique, 600 g d'alumine de type gamma préalablement imprégnée de fer et de 140 g de pseudo-boehmite à 72% de matière sèche. Cette suspension est broyée de telle manière que la taille des particules soit inférieure à 10 microns.

Un monolithe céramique de 0,84 litre est enduit par cette suspension d'alumine, selon le procédé de l'exemple 1, de façon à déposer 120g de support poreux par litre de catalyseur (substrat).

On imprègne ensuite le monolithe par une solution de palladium de façon à déposer en poids 3% de palladium par rapport au support poreux enduit, soit encore exprimé par rapport au catalyseur : 3,6 g de palladium par litre de catalyseur.

Ce catalyseur C2 ainsi préparé contient en poids rapporté au support poreux 1,31% de fer et 3% de palladium.

### EXEMPLE 3 (comparatif): Préparation d'un catalyseur C3

Afin de montrer l'effet du fer sur l'activité catalytique, on prépare une suspension d'enduction à partir de deux litres d'eau déisonisée additionnée de l'équivalent de 12g d'acide nitrique, 600g d'alumine de type gamma préalablement imprégnée uniquement de cérium et de 140g de pseudo-boehmite à 72% de matière sèche. Cette suspension est broyée de telle manière que la taille des particules soit inférieure à 10 microns.

Un monolithe céramique de 0,84 litre est enduit par cette suspension d'alumine, selon le procédé de l'exemple 1, de façon à déposer 120g de support poreux par litre de catalyseur (substrat).

On imprègne ensuite le monolithe par une solution de palladium de façon à déposer en poids 3% de palladium par rapport au support poreux enduit, soit encore exprimé par rapport au catalyseur : 3,6g de palladium par litre de catalyseur.

Ce catalyseur C3 ainsi préparé contient en poids rapporté au support poreux 4,15% de cérium et 3% de palladium.

### EXEMPLE 4 (comparatif): Préparation d'un catalyseur C4

Afin de montrer l'effet du fer et du cérium sur l'activité catalytique, on prépare une suspension d'enduction à partir de deux litres d'eau désionisée additionnée de l'équivalent de 12g d'acide nitrique, 600g d'alumine de type gamma sans fer ni cérium et de 140 g de pseudo-boehmite à 72% de matière sèche. Cette suspension est broyée de telle manière que la taille des particules soit inférieure à 10 microns.

Un monolithe céramique de 0,84 litre est enduit par cette suspension d'alumine, selon le procédé de l'exemple 1, de façon à déposer 120g d'alumine par litre de catalyseur (substrat).

On imprègne ensuite le monolithe par une solution de palladium de façon à déposer en poids 3% de palladium par rapport au support poreux enduit, soit encore exprimé par rapport au catalyseur : 3,6 g de palladium par litre de catalyseur.

### EXEMPLE 5: Préparation d'un catalyseur C5 utilisé dans l'invention.

On prépare une suspension d'enduction à partir de deux litres d'eau désionisée additionnée de l'équivalent de 12g d'acide nitrique, 600g d'alumine de type gamma préalablement imprégnée de cérium et de fer et de 140g de pseudo-boehmite à 72% de matière sèche. Cette suspension est broyée de telle manière que la taille des particules soit inférieure à 10 microns.

Un monolithe céramique de 0,84 litre est enduit par cette suspension d'alumine, selon le procédé de l'exemple 1, de façon à déposer 120g de support poreux par litre de catalyseur (substrat).

On imprègne ensuite le monolithe par une solution de palladium de façon à déposer en poids 3% de palladium par rapport au support poreux enduit, soit encore exprimé par rapport au catalyseur : 3,6 g de palladium par litre de catalyseur.

Ce catalyseur C5 ainsi préparé contient en poids rapporté au support poreux 8,15% de cérium, 1.3% de fer et 3% de palladium.

### EXEMPLE 6 (comparatif): Préparation d'un catalyseur C6

On prépare une suspension d'enduction à partir de deux litres d'eau désionisée additionnée de l'équivalent de 12g d'acide nitrique, 600g d'alumine de type gamma préalablement imprégnée de cérium et de 140g de pseudo-boehmite à 72% de matière sèche. Cette suspension est broyée de telle manière que la taille des particules soit inférieure à 10 microns.

Un monolithe céramique de 0,84 litre est enduit par cette suspension d'alumine, selon le procédé de l'exemple 1, de façon à déposer 120g de support poreux par litre de catalyseur (substrat).

On imprègne ensuite le monolithe par une solution de palladium de façon à déposer en poids 3% de palladium par rapport au support poreux enduit, soit encore exprimé par rapport au catalyseur : 3,6 g de palladium par litre de catalyseur.

Le catalyseur C6 ainsi préparé contient en poids rapporté au support poreux 40% de cérium et 3% de palladium.

### EXEMPLE 7: Activité catalytique des catalyseurs C1 à C6

Les performances des catalyseurs sont comparés pour la réaction de combustion du méthane, principal constituant du gaz naturel.

Dans les catalyseurs préparés (références C1 à C6), on découpe des cylindres de 1,5 cm de diamètre et de 5 cm de long, dans le sens longitudinal des canaux.

Les tests sont réalisés dans un réacteur de laboratoire comportant un tube dans lequel est introduit le catalyseur. Ce tube est placé au centre d'un four cylindrique pouvant être porté à une température de 1500°C. Un mélange air-méthane à 3,5 % en volume de méthane est préparé à l'aide de régulateurs de débit massique et envoyé à l'entrée du réacteur. Le débit horaire des gaz est 50 000 fois supérieur au volume du substrat (VVH= 50 000h⁻¹). La concentration en méthane à l'entrée et à la sortie du réacteur est déterminée à l'aide d'un détecteur à ionisation de flamme (analyseur JUM engineering modèle FID 3-300). La conversion en méthane est le rapport en pourcentage entre la différence de concentration en méthane entre l'entrée et la sortie et la concentration en entrée.

Après une montée en température sous mélange réactionnel à 5°C/min de 250°C jusqu'à 530°C, on fixe la température d'entrée du mélange réactionnel à cette température. On détermine la conversion du méthane après 36 heures de fonctionnement en régime stabilisé. Cette durée permet de discriminer de façon significative les formulations en fonction de leur aptitude à stabiliser la combustion du méthane.

Le tableau 1 rassemble les compositions élémentaires des catalyseurs C1 à C6 et les conversions obtenues après 36 heures de fonctionnement en régime établi. Le tableau 1 montre clairement l'effet de synergie entre le fer et le cérium qui conduit à une meilleure stabilité de l'activité catalytique pour les catalyseurs préparés selon l'invention.

**Tableau 1:**

| Composition élémentaire des catalyseurs C1 à C6 et conversions de ces catalyseurs obtenues après 36 heures de fonctionnement en régime établi. | | | | | | |
|---|---|---|---|---|---|---|
| Numéro de l'exemple | Référence du catalyseur | Teneur en Ce (en % poids par rapport au support) | Teneur en Fe (en % poids par rapport au support) | Teneur en Pd (en % poids par rapport au support) | Teneur en Pd (en g/l de catalyseur) | Conversion en % après 36 heures de fonctionnement |
| Exemple 1 selon l'invention | C1 | 4,13 | 1,31 | 3 | 3,6 | >95 |
| Exemple 2 (comparatif) | C2 | 0 | 1,31 | 3 | 3,6 | 45 |
| Exemple 3 (comparatif) | C3 | 4,15 | 0 | 3 | 3,6 | 85 |
| Exemple 4 (comparatif) | C4 | 0 | 0 | 3 | 3,6 | 45 |
| Exemple 5 selon l'invention | C5 | 8,15 | 1.3 | 3 | 3,6 | >90 |
| Exemple 6 (comparatif) | C6 | 40 | 0 | 3 | 3,6 | 45 |

### EXEMPLE 8: Préparation d'un catalyseur C7 utilisé dans l'invention.

On prépare une suspension d'enduction à partir de deux litres d'eau désionisée additionnée de l'équivalent de 12 g d'acide nitrique, 600 g d'alumine de type gamma préalablement imprégnée de fer et de cérium selon le protocole décrit dans l'exemple 1 et de 140g de pseudo-boehmite à 72% de matière sèche. Cette suspension est broyée de telle manière que la taille des particules soit inférieure à 10 microns.

Un monolithe céramique de 0,84 litre est enduit par cette suspension, selon le procédé de l'exemple 1, de façon à déposer 120 g de support poreux par litre de catalyseur (substrat).

Le catalyseur C7 ainsi préparé contient en poids rapporté au support poreux 4,13% de cérium, 1,31% de fer et 10% de palladium.

### EXEMPLE 9 (comparatif): Préparation d'un catalyseur C8 selon l'art antérieur.

On prépare un catalyseur C8 à base de fer, de cérium et de palladium selon le protocole opératoire de l'exemple 1 du brevet US-A- 4 857 499 de façon à déposer 120g de support poreux par litre de catalyseur.

Ce catalyseur C8 contient 4,13% de cérium et 1,31% de fer en poids rapporté au support poreux et en poids rapporté au volume de catalyseur: 12 g/l de palladium.

### EXEMPLE 10: Activité catalytique des catalyseurs C7 et C8

Dans les catalyseurs préparés (références C8 et C7), on découpe des cylindres de 1,5 cm de diamètre et de 5 cm de long, dans le sens longitudinal des canaux.

La procédure d'évaluation de l'exemple 7 est reprise afin de comparer les catalyseurs C7 et C8.

Le tableau 2 rassemble les compositions élémentaires des catalyseurs C7 et C8 et les conversions obtenues après 36 heures de fonctionnement en régime établi.

**Tableau 2 :**

| Composition élémentaire des catalyseurs C7 et C8 et conversions de ces catalyseurs obtenues après 36 heures de fonctionnement en régime établi. | | | | | |
|---|---|---|---|---|---|
| Référence du catalyseur | Teneur en Ce (%) | Teneur en Fe (%) | Teneur en Pd (en % poids par rapport au support) | Teneur en Pd (en g/l de catalyseur) | Conversion en % après 36 h. de fonctionnement |
| C7 selon l'invention | 4,13 | 1,31 | 10 | 12 | >95 |
| C8 comparatif | 4,13 | 1,31 | 10 | 12 | 75 |

### EXEMPLE 11: Préparation de catalyseur C9 et C10 utilisé dans l'invention.

Une nouvelle suspension est préparée à partir de deux litres d'eau désionisée additionnée de l'équivalent de 12g d'acide nitrique, 600g d'alumine de type gamma et de 140 g de pseudo-boehmite à 72% de matière sèche.

Deux monolithes en céramique de 0,84 litre sont enduits par cette suspension de façon à déposer 120g par litre de catalyseur (substrat).

Chaque monolithe enduit est alors imprégné par une solution aqueuse de nitrate céreux et de nitrate ferrique. Il est ensuite séché à 120°C et calciné à 500°C pendant deux heures.

On imprègne alors chaque monolithe séparément par une solution de palladium de façon à déposer respectivement 10% et 5% en poids de palladium par rapport à la couche enduite imprégnée, soit encore exprimé par rapport au catalyseur : respectivement 12 g et 6 g de palladium par litre de catalyseur.

Les catalyseurs C9 et C10 ainsi préparés contiennent en poids rapporté à la couche enduite imprégnée 4,13% de cérium, 1,31% de fer et respectivement 10% de palladium pour C9 et 5% de palladium pour C10.

### EXEMPLE 12 (comparatif) : Préparation de catalyseurs C11 et C12 selon l'art antérieur

Un monolithe de 0,84 litre est enduit par une suspension d'alumine selon le protocole opératoire de l'exemple 11 de façon à déposer 120g d'alumine par litre.

Ce monolithe est ensuite imprégné par du fer, du cérium selon la procédure décrite dans l'exemple 11.

On imprègne alors le monolithe par une solution de palladium de façon à déposer respectivement 1% et 0,5% en poids de palladium rapport à la couche enduite imprégnée, soit encore exprimé par rapport au catalyseur : respectivement 1,2 g et 0,6 g de palladium par litre de catalyseur.

Les catalyseurs C11 et C12 ainsi préparés contiennent en poids rapporté à la couche enduite imprégnée 4,13% de cérium, 1,31% de fer et respectivement 1% de palladium pour C11 et 0,5% de palladium pour C12.

### EXEMPLE 13: Activité catalytique des catalyseurs C9 à C12

Dans les catalyseurs préparés (références C9 à C12), on découpe des cylindres de 1,5 cm de diamètre et de 5 cm de long, dans le sens longitudinal des canaux.

La procédure d'évaluation de l'exemple 7 est reprise afin de comparer les catalyseurs C9 à C12 présentant des teneurs en palladium différentes.

Le tableau 3 rassemble les compositions élémentaires des catalyseurs C9 à C12 et les conversions obtenues après 36 heures de fonctionnement en régime établi.

**Tableau 3 :**

| Composition élémentaire des catalyseurs C9 à C12 et conversions de ces catalyseurs obtenues après 36 heures de fonctionnement en régime établi. | | | | | |
|---|---|---|---|---|---|
| Référence du catalyseur | Teneur en Ce (%) | Teneur en Fe (%) | Teneur en Pd (% par rapport au support ) | Teneur en Pd (en g/l de catalyseur) | Conversion en % après 36 heures de fonctionnement |
| C9 selon l'invention | 4,13 | 1,31 | 10 | 12 | >95 |
| C10 selon l'invention | 4,13 | 1,31 | 5 | 6 | >95 |
| C11 comparatif | 4,13 | 1,31 | 1 | 1,2 | ≈85 |
| C12 comparatif | 4,13 | 1,31 | 0,5 | 0,6 | 50 |

Ce tableau montre clairement qu'une teneur en métal précieux supérieure à celles couramment utilisées en post-combustion est nécessaire pour satisfaire aux exigences d'un procédé de combustion catalytique. A l'opposé, une teneur trop élevée en métal précieux n'améliore pas de façon significative les performances.

### EXEMPLE 14 (comparatif): Préparation d'un catalyseur C13

Afin d'observer l'effet du lanthane, bon inhibiteur du frittage de l'alumine, sur la stabilité de l'activité catalytique, on prépare une suspension d'enduction à partir de deux litres d'eau désionisée additionnée de l'équivalent de 12g d'acide nitrique, 600g d'alumine de type gamma préalablement imprégnée de lanthane (21 g de La₂O₃) et de 140g de pseudo-boehmite à 72% de matière sèche. Cette suspension est broyée de telle manière que la taille des particules soit inférieure à 10 microns.

Un monolithe céramique de 0,84 litre est enduit par cette suspension, selon le procédé de l'exemple 1, de façon à déposer 120g de support poreux par litre de catalyseur (substrat).

On imprègne ensuite le monolithe par une solution de palladium de façon à déposer en poids 3% de palladium par rapport au support poreux enduit, soit encore rapporté au catalyseur : 3,6 g de palladium par litre de catalyseur.

Le catalyseur C13 ainsi préparé contient en poids rapporté au support poreux 3% de La₂O₃ et 3% de palladium.

### EXEMPLE 15 (comparatif): Préparation d'un catalyseur C14 selon l'art antérieur

Afin d'observer l'effet de la silice, bon inhibiteur du frittage de l'alumine, sur la stabilité de l'activité catalytique, on prépare une suspension d'enduction à partir de deux litres d'eau désionisée additionnée de l'équivalent de 12g d'acide nitrique, 600g d'alumine de type gamma préalablement imprégnée de silicium et de 140g de pseudo-boehmite à 72% de matière sèche. Cette suspension est broyée de telle manière que la taille des particules soit inférieure à 10 microns.

Un monolithe céramique de 0,84 litre est enduit par cette suspension, selon le procédé de l'exemple 1, de façon à déposer 120g de support poreux par litre de catalyseur (substrat).

On imprègne ensuite le monolithe par une solution de palladium de façon à déposer en poids 3% de palladium par rapport au support poreux enduit, soit encore rapporté au catalyseur : 3,6 g de palladium par litre de catalyseur.

Le catalyseur C14 ainsi préparé contient en poids rapporté au support poreux 4% de SiO₂ et 3% de palladium.

### EXEMPLE 16 (comparatif): Préparation d'un catalyseur C15

Afin d'observer l'effet du baryum, bon inhibiteur du frittage de l'alumine, sur la stabilité de l'activité catalytique, on prépare une suspension d'enduction à partir de deux litres d'eau désionisée additionnée de l'équivalent de 12g d'acide nitrique, 600g d'alumine de type gamma préalablement imprégnée de baryum et de 140g de pseudo-boehmite à 72% de matière sèche. Cette suspension est broyée de telle manière que la taille des particules soit inférieure à 10 microns.

Un monolithe céramique de 0,84 litre est enduit par cette suspension, selon le procédé de l'exemple 1, de façon à déposer 120g de support poreux par litre de catalyseur (substrat).

On imprègne ensuite le monolithe par une solution de palladium de façon à déposer en poids 3% de palladium par rapport au support poreux enduit, soit encore rapporté au catalyseur : 3,6 g de palladium par litre de catalyseur.

Le catalyseur C15 ainsi préparé contient en poids rapporté au support poreux 3% de BaO et 3% de palladium

### EXEMPLE 17: Activité catalytique des catalyseurs C1 et C13 à C15

Dans les catalyseurs préparés (références C13 à C15), on découpe des cylindres de 1,5 cm de diamètre et de 5 cm de long, dans le sens longitudinal des canaux.

La procédure d'évaluation de l'exemple 7 est reprise afin de comparer les catalyseurs C1 et C13 à C15 afin d'évaluer l'effet des stabilisants de l'alumine sur la stabilité de l'activité catalytique en régime établi.

Le tableau 4 rassemble les compositions élémentaires des catalyseurs C1 et C13 à C15 et les conversions obtenues après 36 heures de fonctionnement en régime établi.

Le tableau 4 montre clairement que les promoteurs à base de terre rare, de métaux alcalino-terreux ou de silice adaptés pour inhiber le frittage de l'alumine à haute température ne permettent pas de limiter efficacement la chute d'activité catalytique observé en régime établi (catalyseurs C13 à C15). En revanche, le catalyseur C1 selon l'invention conserve son activité.

**Tableau 4:**

| Composition élémentaire des catalyseurs C1 et C13 à C15 et conversions de ces catalyseurs obtenues après 36 heures de fonctionnement en régime établi. | | | | | | |
|---|---|---|---|---|---|---|
| Référence de l'exemple | Référence du catalyseur | Teneur en Ce (%) | Teneur en Fe (%) | Teneur en Pd (en g/l de catalyseur) | Teneur en oxyde stabilisant (%) | Conversion en % après 36 heures de fonctionnement |
| Exemple 1 selon l'invention | C1 | 4,13 | 1,31 | 3,6 | 0 | >95 |
| Exemple 14 (comparatif) | C13 | 0 | 0 | 3,6 | La₂O₃ (3%) | ≈ 46 |
| Exemple 15 (comparatif) | C14 | 0 | 0 | 3,6 | SiO₂(4%) | ≈ 69 |
| Exemple 16 (comparatif) | C15 | 0 | 0 | 3,6 | BaO (3%) | ≈ 45 |

### EXEMPLE 18: Préparation d'un catalyseur C16 utilisé dans l'invention.

On prépare une suspension d'enduction à partir de deux litres d'eau désionisée additionnée de l'équivalent de 12g d'acide nitrique, 600g d'alumine de type gamma préalablement imprégnée de fer et de cérium selon le protocole décrit dans l'exemple 1 et de 140g de pseudo-boehmite à 72% de matière sèche. Cette suspension est broyée de telle manière que la taille des particules soit inférieure à 10 microns.

Un monolithe céramique de 0,84 litre est enduit par cette suspension, selon le procédé de l'exemple 1, de façon à déposer 120g de support poreux par litre de catalyseur (substrat).

On imprègne ensuite le monolithe par une solution de palladium de façon à déposer en poids 5% de palladium par rapport au support poreux enduit, soit encore rapporté au catalyseur : 6 g de palladium par litre de catalyseur.

Le catalyseur C16 ainsi préparé contient en poids rapporté au support poreux 4,13% de cérium, 1,31% de fer et 5% de palladium.

### EXEMPLE 19 (comparatif): Préparation d'un catalyseur C17

Un monolithe céramique de 0,84 litre est enduit par une suspension préparée comme décrit dans l'exemple 14, selon le procédé de l'exemple 1, de façon à déposer 120g de support poreux par litre de catalyseur (substrat).

On imprègne ensuite ce monolithe par une solution de palladium de façon à déposer en poids 5% de palladium par rapport au support poreux enduit, soit encore rapporté au catalyseur : 6 g de palladium par litre de catalyseur.

Le catalyseur C17 ainsi préparé contient en poids rapporté au support poreux 3% de La₂O₃ et 5% de palladium.

### EXEMPLE 20 (comparatif) : Préparation d'un catalyseur C18

Un monolithe céramique de 0,84 litre est enduit par une suspension préparée comme décrit dans l'exemple 18, selon le procédé de l'exemple 1, de façon à déposer 120g de support poreux par litre de catalyseur (substrat).

On imprègne ensuite ce monolithe par une solution de palladium de façon à déposer en poids 5% de palladium par rapport au support poreux enduit, ce qui équivalent à 6 g de palladium par litre de catalyseur.

Dans une deuxième étape, on imprègne ce monolithe enduit et imprégné de par une solution de nitrate de manganèse de façon à déposer en poids 5% de manganèse par rapport au support poreux enduit, soit 6 g de manganèse par litre de catalyseur.

Le catalyseur C18 ainsi préparé contient en poids rapporté au support poreux 3% de La₂O₃, 5% de palladium et 5% de manganèse.

### EXEMPLE 21 (comparatif): Préparation d'un catalyseur C19

Un monolithe céramique de 0,84 litre est enduit par une suspension préparée comme décrit dans l'exemple 18, selon le procédé de l'exemple 1, de façon à déposer 120g de support poreux par litre de catalyseur (substrat).

On imprègne ensuite ce monolithe par une solution de palladium de façon à déposer en poids 5% de palladium par rapport au support poreux enduit, soit encore rapporté au catalyseur : 6 g de palladium par litre de catalyseur.

Dans une deuxième étape, on imprègne ce monolithe enduit et imprégné par une solution de nitrate de zinc de façon à ce que la teneur en zinc déposé soit égale à 5% en poids rapporté à la couche enduite, soit encore rapporté au catalyseur : 6 g de zinc par litre de catalyseur.

Le catalyseur C19 ainsi préparé contient en poids rapporté au support poreux 3% de La₂O₃, 5% de palladium et 5% de zinc.

### EXEMPLE 22: Activité catalytique des catalyseurs C16 à C19

Dans les catalyseurs préparés (références C16 à C18), on découpe des cylindres de 1,5 cm de diamètre et de 5 cm de long, dans le sens longitudinal des canaux.

La procédure d'évaluation de l'exemple 7 est reprise afin de comparer les catalyseurs C16 à C18 en vue d'évaluer l'effet des stabilisants de la phase métallique sur la stabilité de l'activité catalytique.

Le tableau 5 rassemble les compositions élémentaires des catalyseurs C16 à C18 et les conversions obtenues après 36 heures de fonctionnement en régime établi.

**Tableau 5.**

| Composition élémentaire des catalyseurs C16 à C19 et conversions de ces catalyseurs obtenues après 36 heures de fonctionnement en régime établi. | | | | | | | |
|---|---|---|---|---|---|---|---|
| Référence de l'exemple | Référence du catalyseur | Teneur en Ce (%) | Teneur en Fe (%) | Teneur en La₂O₃ (%) | Teneur en Pd (g/l) | Teneur en stabilisant (g/l) | Conversion en % après 36 heures de fonctionnement |
| Exemple 18 selon l'invention | C16 | 4,18 | 1,31 | 0 | 6 | 0 | >95 |
| Exemple 19 (comparatif) | C17 | 0 | 0 | 3 | 6 | 0 | 69 |
| Exemple 20 (comparatif) | C18 | 0 | 0 | 3 | 6 | Mg (6g) | 60 |
| Exemple 21 (comparatif) | C19 | 0 | 0 | 3 | 6 | Zn (6g) | 60 |

Le tableau 5 montre clairement que les dopants stabilisateurs de la phase métallique qui conviennent pour inhiber le frittage de la phase métallique à haute température ne permettent pas de limiter efficacement la chute d'activité catalytique observée en régime établi (catalyseurs C17 à C19). En revanche, le catalyseur C16 conserve son activité.

### EXEMPLE 23 : Préparation de catalyseurs C20 à C25 utilisé dans l'invention

Afin d'évaluer l'impact de différents dopants de l'alumine (Si, La, Ba) sur la stabilité du catalyseur selon l'invention, on prépare trois suspensions d'alumine identiques à 30% de matière sèche. A ces trois suspensions, on aditionne respectivement une solution soit de silicium, soit de lanthane, soit de baryum de manière à ce que le rapport atomique (cation dopant/Al ₜₒₜₐₗ) = 0.01.

Trois monolithes en céramique de 0,841 sont enduits par ces suspensions, selon le procédé de l'exemple 1, de façon à déposer 250 g de support poreux par litre de catalyseur (substrat).

Ces monolithes sont ensuite imprégnés par une solution de fer et de cérium selon la procédure décrite dans l'exemple 11.

On imprègne enfin chacun de ces trois monolithes par une solution de palladium de façon à déposer en poids 2,4% de palladium par rapport au support poreux enduit, soit encore rapporté au catalyseur : 6 g de palladium par litre de catalyseur.

Le catalyseur C20 ainsi préparé contient en poids rapporté au support poreux 4,13% de cérium, 1,31% de fer, 0.55%Si et 5% de palladium, le catalyseur C21 ainsi préparé contient en poids rapporté au support poreux 4,13% de cérium, 1,31% de fer, 2,7% La et 5% de palladium et le catalyseur C22 ainsi préparé contient en poids rapporté au support poreux 4,13% de cérium, 1,31% de fer, 2,7% Ba et 5% de palladium.

Par ailleurs, on prépare de la même façon que le catalyseur C20 des catalyseurs C23, C24 et C25 contenant une teneur plus élevée en silicium, respectivement 1%, 2% et 3%.

### EXEMPLE 24 : Stabilité thermique des catalyseurs C20 à C25 utilisé dans l'invention

Le test de vieillissement hydrothermique est réalisé dans un réacteur de laboratoire comportant un tube dans lequel est introduit le catalyseur. Ce tube est placé au sein d'un four cylindrique pouvant être porté à une température de 1200°C. Un mélange air/1%vapeur d'eau est envoyé à l'entrée du réacteur. Le débit est de 11/h/gramme de catalyseur. La température est fixée à 900°C, mesurée à l'aide d'un thermocouple et la durée du traitement est de 4 heures. Ces conditions opératoires ont été choisies car elles sont représentatives des conditions de fonctionnement d'un catalyseur de combustion dans un premier étage d'un réacteur de combustion catalytique. On a mesuré la surface du catalyseur après un tel traitement en fonction de la nature des dopants. Le tableau 6 rassemble les compositions élémentaires et la surface mesurée.

**Tableau 6:**

| Composition élémentaire des catalyseurs C16 et C20 à C25 et surface après vieillissement hydrothermique à 900°C-4h-1% eau | | | | | |
|---|---|---|---|---|---|
| Référence du catalyseur | Teneur en Ce (%) | Teneur en Fe (%) | Teneur en Pd (en g/l de catalyseur) | Teneur en stabilisant (%pds) | Surface mesurée après vieillissement hydrothermique (m²/g) |
| C16 | 4,13 | 1,31 | 6 | 0 | 131 |
| C20 | 4,13 | 1,31 | 6 | Si (0,55%) | 154 |
| C21 | 4,13 | 1,31 | 6 | La (2,7%) | 139 |
| C22 | 4,13 | 1,31 | 6 | Ba (2,7%) | 131 |
| C23 | 4,13 | 1,31 | 6 | Si (1%) | 161 |
| C24 | 4,13 | 1,31 | 6 | Si (2%) | 165 |
| C25 | 4,13 | 1,31 | 6 | Si (3%) | 163 |

Le tableau 6 montre qu'il peut être particulièrement avantageux de rajouter du silicium afin d'améliorer la résistance au frittage du support. La teneur préférée en silicium étant comprise entre 1 et 3%. Par contre, le lanthane et le baryum, qui sont plutôt des dopants intéressants pour inhiber la transformation de l'alumine se produisant vers 1100°C-1200°C : alumine thêta->alumine alpha (cf. l'article de D.L.Trimm intitulé : "Thermal stability of catalysts supports" dans la revue Stud.Surf. Sci.Catal., Vol.68, 29-51, (1991)), se révèlent moins efficaces que le silicium.

### EXEMPLE 25 : Préparation de catalyseurs C26, C27, C28, C29 et C30 utilisé dans l'invention

Afin de montrer l'effet de la teneur en support poreux sur la stabilité de l'activité catalytique, on prépare une suspension comme dans l'exemple 11. Cinq monolithes en céramique de 0,84 litre sont enduits par cette suspension, selon le procédé décrit dans l'exemple 1, de façon à déposer respectivement 200g, 250g, 300g, 350g et 400g de support poreux par litre de catalyseur (substrat).

Ces cinq monolithes ainsi enduits sont imprégnés par une solution de fer et de cérium selon la procédure décrite dans l'exemple 11.

Ces cinq monolithes sont imprégnés ensuite à iso-teneur en palladium par rapport au substrat soit 6 g de palladium par litre de catalyseur, correspondant respectivement à 3%, 2,4%, 2%, 1,71% et 1,5% en poids de palladium par rapport au support poreux.

Les catalyseurs ainsi préparés sont numérotés respectivement C26, C27, C28, C29 et C30.

### EXEMPLE 26 (comparatif) : Préparation d'un catalyseur C31

Afin d'évaluer l'effet de l'augmentation de la teneur en support poreux à iso-teneur en métal sur la stabilité de l'activité catalytique d'une formulation représentative de l'art antérieur, un monolithe céramique de 0,84 litre est enduit par une suspension préparée comme décrit dans l'exemple 14, de façon à déposer 200 g de support poreux par litre de catalyseur (substrat).

Ce monolithe ainsi enduit est imprégné par une solution de fer et du cérium selon la procédure décrite dans l'exemple 11.

On imprègne ensuite ce monolithe par une solution de palladium de façon à déposer 6 g de palladium par rapport à un litre de catalyseur.

Le catalyseur C31 ainsi préparé contient en poids rapporté au support poreux 3% de La₂O₃ et 3% de palladium.

### EXEMPLE 27 (comparatif) : Préparation d'un catalyseur C32

Un monolithe céramique de 0,84 litre est enduit par une suspension contenant du fer, du cérium et du palladium, de façon à déposer 200 g de support poreux par litre de catalyseur (substrat). Les teneurs en fer et en cérium sont identiques à celle des catalyseurs C26 à C30.

Le catalyseur C32 ainsi préparé contient en poids rapporté au support poreux 4,13% de cérium, 1,31% de fer et 0,7% de palladium soit 1,4 g de palladium par litre de catalyseur.

### EXEMPLE 28 : Activité catalytique des catalyseurs C10, C17 et C26 à 32

Dans les catalyseurs préparés (références C10, C17, C26, C27, C28, C29, C30, C31 et C32), on découpe des cylindres de 1,5 cm de diamètre et de 5 cm de long, dans le sens longitudinal des canaux. La procédure d'évaluation de l'exemple 7 est reprise afin de comparer ces catalyseurs en vue d'évaluer l'effet de la teneur en support poreux sur la stabilité de l'activité catalytique.

Le tableau 7 rassemble les compositions élémentaires des catalyseurs C10, C17 et C26 à C32 et les conversions obtenues après 36 heures de fonctionnement en régime établi.

**Tableau 7:**

| Composition élémentaire des catalyseurs C10, C17 et C26 à C32 et conversions de ces catalyseurs obtenues après 36 heures de fonctionnement en régime établi. | | | | | | |
|---|---|---|---|---|---|---|
| Référence du catalyseur | Teneur en support poreux g/l | Teneur en Ce (%) | Teneur en Fe (%) | Teneur en La₂O₃ (%) | Teneur en Pd (en g/l de catalyseur) | % de conversion après 36 heures de fonctionnement |
| C10 selon l'invention | 120 | 4,18 | 1,31 | 0 | 6 | >95 |
| C26 selon l'invention | 200 | 4,18 | 1,31 | 0 | 6 | >98 |
| C27 selon l'invention | 250 | 4,18 | 1,31 | 0 | 6 | >98 |
| C28 selon l'invention | 300 | 4,18 | 1,31 | 0 | 6 | >98 |
| C29 selon l'invention | 350 | 4,18 | 1,31 | 0 | 6 | >95 |
| C30 selon l'invention | 400 | 4,18 | 1,31 | 0 | 6 | >90 |
| C17 comparatif | 120 | 0 | 0 | 3 | 6 | ≈ 46 |
| C31 comparatif | 200 | 0 | 0 | 3 | 6 | ≈ 46 |
| C32 comparatif | 200 | 4,18 | 1,31 | 0 | 1,4 | ≈ 80 |

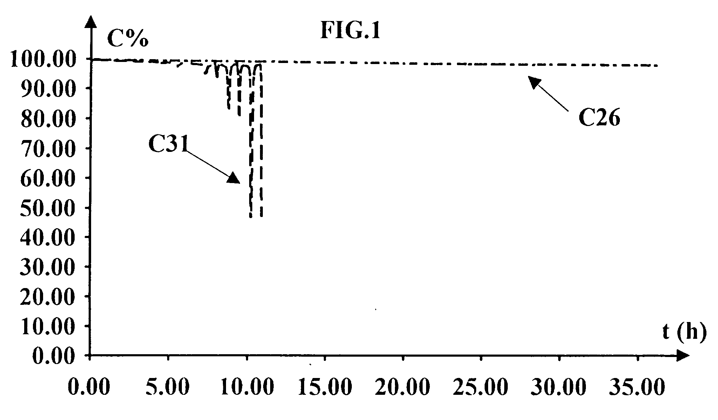

Le tableau 7 montre clairement que l'augmentation de la teneur en alumine à iso-teneur en palladium pour le catalyseur de la présente invention augmente la stabilité de l'activité catalytique du catalyseur. Une teneur supérieure à 200 g/l améliore de façon significative cette stabilité, toutefois une teneur trop élevée en support poreux c'est à dire supérieure à 400g/l se révèle être néfaste en raison notamment du bouchage des canaux du monolithe lors de l'enduction. En revanche, pour le catalyseur C31 de l'art antérieur, l'augmentation de la teneur en support poreux n'améliore pas la stabilité du catalyseur par comparaison avec le catalyseur C17 de l'exemple 19. La figure 1 qui représente les évolutions de la conversion du méthane en fonction du temps pour le catalyseur C26 selon l'invention et le catalyseur C31 de l'art antérieur montre clairement que l'activité catalytique du catalyseur C31 se met à osciller au bout de quelques heures de fonctionnement tandis que le catalyseur C26 conserve une activité élevée (>98%) après 36 heures. En ce qui concerne le catalyseur C32, dont les teneurs en palladium et en alumine sont représentatives des catalyseurs de post-combustion automobile, celui-ci ne conserve pas une stabilité suffisante en combustion catalytique du méthane, application dont les conditions opératoires sont fort éloignées des conditions opératoires de la post-combustion.

### EXEMPLE 29 (comparatif) : Activité catalytique en post-combustion du catalyseur C26 utilisé dans l'invention

Dans le catalyseur préparé C26, on découpe un cylindre de 30 mm de diamètre et de 76 mm de long, dans le sens longitudinal des canaux. Ce catalyseur est testé sur un montage de laboratoire tel que décrit dans l'exemple 10 de la demande de brevet FR-A-90 15750, déposé par la demanderesse, afin de déterminer son comportement vis à vis de l'oxydation du monoxyde de carbone, d'hydrocarbures et de la réduction du monoxyde d'azote. Les proportions du mélange étudié qui sont caractéristiques des gaz d'échappement de véhicule à essence sont les suivantes :

| | |
|---|---|
| CO | 9000 ppm |
| NO | 2000ppm |
| CH₄ | 97 ppm |
| C₂H₂ | 102 ppm (équivalent méthane) |
| C₂H₄ | 581 ppm (équivalent méthane) |
| C₃H₈ | 720 ppm (équivalent méthane) |
| CO₂ | 10% |
| H₂O | 7% |
| O₂ | 0.6% |
| N₂ | complément |

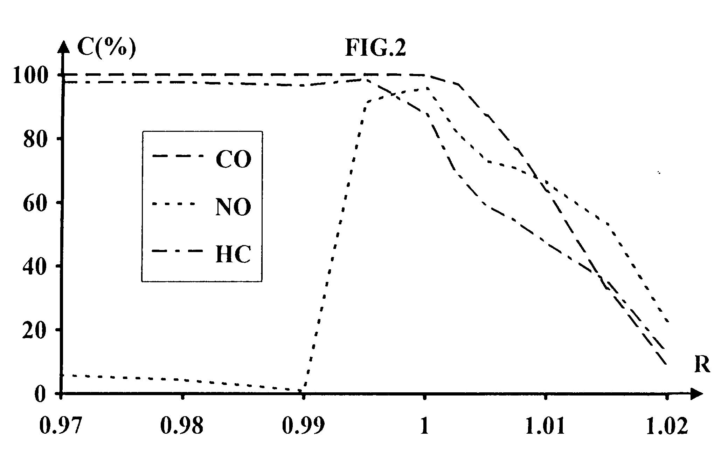

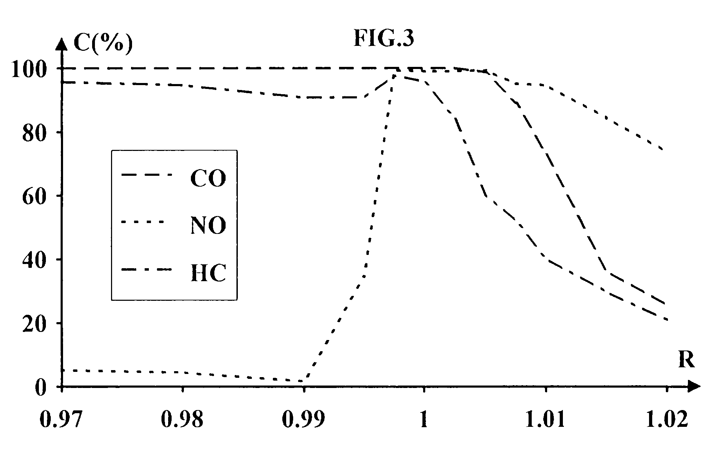

La figure 2 représente les évolutions respectives de la conversion du CO et des hydrocarbures et de la réduction du NO en fonction de la richesse du mélange. On observe notamment que la réduction du NO n'est pas totale contrairement à un catalyseur conventionnel de post-combustion et que la plage de réduction de NO est beaucoup plus étroite que pour un catalyseur conventionnel de post-combustion (figure 3).

Cet exemple 29 montre qu'un catalyseur selon l'invention ne convient pas pour le traitement des gaz d'échappement d'un véhicule à essence fonctionnant à la richesse 1.

### EXEMPLE 30 : Préparation d'un catalyseur C33 utilisé dans l'invention.

Afin d'évaluer l'effet du platine sur la combustion du méthane, on prépare un catalyseur C33 de la même façon que le catalyseur C10 mais en substituant, à iso-teneur en métal précieux, le palladium par le platine. Le catalyseur C33 contient 6g de platine par litre de catalyseur.

Le catalyseur C33 ainsi préparé contient en poids rapporté au support poreux 4,13% de cérium, 1,31% de fer et 5% de platine.

### EXEMPLE 31: Activité catalytique des catalyseurs C10 et C33 utilisé dans l'invention.

Dans les catalyseurs préparés (références C10 et C33), on découpe des cylindres de 1,5 cm de diamètre et de 5 cm de long, dans le sens longitudinal des canaux.

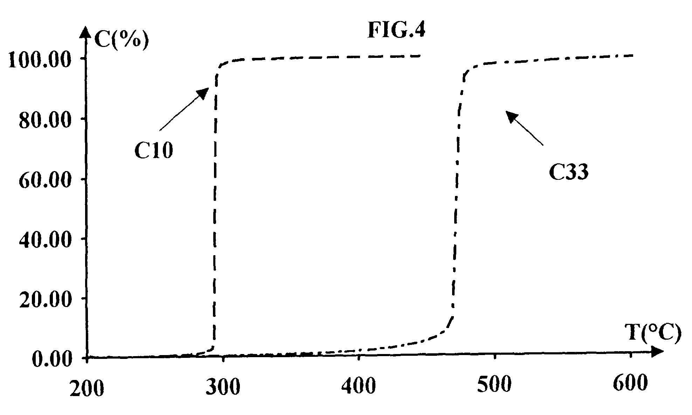

Les tests sont réalisés dans un montage de laboratoire comme décrit dans l'exemple 6. Le mélange réactionnel est porté, à la vitesse de 5°C/min de 250°C à 875°C. Le débit horaire des gaz est 50 000 fois supérieur au volume du substrat (VVH= 50 000h⁻¹). La concentration en méthane à l'entrée et à la sortie du réacteur est déterminée à l'aide d'un détecteur à ionisation de flamme. La conversion en méthane est le rapport en pourcentage entre la différence de concentration en méthane entre l'entrée et la sortie et la concentration en entrée. La figure 4 représente les évolutions de la conversion en méthane en fonction de la température d'entrée du mélange en fonction soit du catalyseur C10 soit du catalyseur C33.

Le platine se révèle être moins performant que le palladium pour l'amorçage de la combustion du méthane : la température de demi-conversion est d'environ 300°C pour le catalyseur C10 contre environ 470°C pour le catalyseur C33.

## Revendications

1. Procédé de combustion catalytique d'un combustible choisi parmi, le méthane, le monoxyde de carbone, l'hydrogène et leurs mélanges en toutes proportions, en milieu très oxydant, caractérisé en ce qu'on fait passer ledit combustible au contact d'au moins un catalyseur comprenant un substrat monolithique, un support poreux à base d'oxyde inorganique réfractaire et une phase active constituée de cérium, de fer et d'au moins un métal précieux choisi dans le groupe formé par le palladium et le platine, la teneur en support poreux étant comprise entre 100 et 400 g par litre de catalyseur, la teneur en cérium étant comprise entre 0,3 et 20% en poids par rapport au support poreux, la teneur en fer étant comprise entre 0,01 et 3,5% de fer en poids par rapport au support poreux et la teneur en palladium et/ou platine étant comprise entre 3 et 20 g par litre de catalyseur.

2. Procédé selon la revendication 1, caractérisé en ce que, dans ledit catalyseur, la teneur en support poreux est comprise entre 200 et 350 g par litre de catalyseur, la teneur en cérium est comprise entre 2 et 15% en poids par rapport au support poreux, la teneur en fer est comprise entre 0,1 et 2% de fer en poids par rapport au support poreux et la teneur en palladium et/ou platine est comprise entre 5 et 15 g par litre de catalyseur.

3. Procédé selon l'une des revendications 1 et 2 caractérisé en ce que, dans ledit catalyseur, le métal précieux est le palladium.

4. Procédé selon l'une des revendications 1 à 3, caractérisé en ce que, dans ledit catalyseur, le support poreux à base d'oxyde inorganique réfractaire est choisi dans le groupe formé par l'alumine alpha, l'alumine delta, l'alumine éta, l'alumine gamma, l'alumine kappa, l'alumine khi, l'alumine rhô, l'alumine théta, la silice, les silices-alumines, l'oxyde de titane, la zircone et leurs mélanges.

5. Procédé selon l'une des revendications 1 à 4, caractérisé en ce que, dans ledit catalyseur, ledit support poreux présente une surface spécifique comprise entre 20 et 250 m²/g.

6. Procédé selon l'une des revendications 1 à 5, caractérisé en ce que, dans ledit catalyseur, le support poreux à base d'oxyde inorganique réfractaire est choisi dans le groupe formé par l'alumine alpha, l'alumine delta, l'alumine éta, l'alumine gamma, l'alumine kappa, l'alumine khi, l'alumine rhô et l'alumine théta.

7. Procédé selon la revendication 6, caractérisé en ce que ledit support a été stabilisé thermiquement par introduction d'au moins un composé choisi dans le groupe formé par les oxydes de terres rares trivalentes, les oxydes de métaux alcalino-terreux et la silice.

8. Procédé selon la revendication 7, caractérisé en ce que ledit support a été stabilisé thermiquement par la silice.

9. Procédé selon la revendication 8, caractérisé en ce que la teneur en silice est de 1 à 5% en poids par rapport au support poreux.

10. Procédé selon l'une des revendications 1 à 9, caractérisé en ce que, dans ledit catalyseur, ledit substrat monolithique est métallique ou céramique.

11. Procédé selon la revendication 10, caractérisé en ce que ledit substrat monolithique a une densité de cellules de 7,75 à 93 cellules par cm².

12. Procédé selon l'une des revendications 1 à 11, caractérisé en ce qu'il comprend plusieurs étages catalytiques dont au moins un fonctionne à des températures inférieures à 1100°C et utilise un catalyseur défini comme dans l'une des revendications 1 à 11.

## Patentansprüche

1. Katalytisches Verbrennungsverfahren eines Brennstoffes, der unter Methan, Kohlenmonoxid, Wasserstoff und ihren Gemischen in beliebigen Verhältnissen ausgesucht wird, in einem sehr stark oxidierenden Milieu, dadurch gekennzeichnet, dass der besagte Brennstoff in Berührung mit mindestens einem Katalysator gebracht wird, der ein monolithisches Substrat, einen Porenträger auf der Grundlage eines anorganischen feuerfesten Oxids und eine Aktivphase enthält, die aus Cerium, Eisen und mindestens einem Edelmetall besteht, das in der aus Palladium und Platin bestehenden Gruppe ausgesucht wurde, wobei der Ceriumgehalt zwischen 0,3 und 20 Gewichtsprozent des Porenträgers, der Eisengehalt zwischen 0,01 und 3,5 Gewichtsprozent des Porenträgers und der Palladiumgehalt und/oder Platingehalt zwischen 30 und 20 g pro Liter Katalysator betragen.

2. Verfahren nach Anspruch 1, dadurch gekennzeichnet, dass der Porenträgergehalt im besagten Katalysator zwischen 200 und 350 g pro Liter Katalysator, der Ceriumgehalt zwischen 2 und 15 Gewichtsprozent des Porenträgers, der Eisengehalt zwischen 0,1 und 2 Gewichtsprozent des Porenträgers und der Palladiumgehalt und/oder Platingehalt zwischen 5 und 15 g pro Liter Katalysator betragen.

3. Verfahren nach einem der Ansprüche 1 und 2, dadurch gekennzeichnet, dass im besagten Katalysator das Edelmetall Palladium ist.

4. Verfahren nach einem der Ansprüche 1 bis 3, dadurch gekennzeichnet, dass im besagten Katalysator der Porenträger auf der Grundlage eines anorganischen feuerfesten Oxids aus der Gruppe ausgesucht wird, die aus α-Aluminiumoxid, δ-Aluminiumoxid, η-Aluminiumoxid, γ-Aluminiumoxid, κ-Aluminiumoxid, χ-Aluminiumoxid, ρ-Aluminiumoxid, θ-Aluminiumoxid, Kieselsäureanhydrid, Tonerdesilikaten, Titanoxid, Zirkonium und ihren Gemischen besteht.

5. Verfahren nach einem der Ansprüche 1 bis 4, dadurch gekennzeichnet, dass im besagten Katalysator der besagte Porenträger eine Oberflächenkennzahl aufweist, die zwischen 20 und 250 m²/g beträgt.

6. Verfahren nach einem der Ansprüche 1 bis 5, dadurch gekennzeichnet, dass im besagten Katalysator der Porenträger auf der Grundlage eines anorganischen feuerfesten Oxids aus der Gruppe ausgesucht wird, die aus α-Aluminiumoxid, δ-Aluminiumoxid, η-Aluminiumoxid, γ-Aluminiumoxid, κ-Aluminiumoxid, χ-Aluminiumoxid, ρ-Aluminiumoxid, θ-Aluminiumoxid besteht.

7. Verfahren nach einem der Ansprüche 1 bis 5, dadurch gekennzeichnet, dass der besagte Träger durch Einleitung von mindestens einer Verbindung, die aus der Gruppe, bestehend aus den dreiwertigen Seltenerdoxiden, den erdalkalischen Metalloxiden und dem Kieselsäureanhydrid, ausgesucht wurde, eine thermische Stabilisierung erfahren hat.

8. Verfahren nach Anspruch 7, dadurch gekennzeichnet, dass der besagte Träger durch Kieselsäureanhydrid eine thermische Stabilisierung erfahren hat.

9. Verfahren nach Anspruch 8, dadurch gekennzeichnet, dass der Kieselsäureanhydridgehalt 1 bis 5 Gewichtsprozent des Porenträgers beträgt.

10. Verfahren nach einem der Ansprüche 1 bis 9, dadurch gekennzeichnet, dass im besagten Katalysator das besagte monolithische Substrat aus Metall oder Keramik besteht.

11. Verfahren nach einem der Ansprüche 1 bis 10, dadurch gekennzeichnet, dass das besagte monolithische Substrat eine Zellendichte von 7,75 bis 93 Zellen pro cm² aufweist.

12. Verfahren nach einem der Ansprüche 1 bis 11, dadurch gekennzeichnet, dass es aus mehreren katalytischen Stufen besteht, wobei mindestens eine dieser Stufen bei Temperaturen unter 1.100°C funktioniert, und dass ein Katalysator Anwendung findet, wie er in einem der Ansprüche 1 bis 11 definiert wurde.

## Claims

1. A process for catalytic combustion of a combustible substance selected from methane, carbon monoxide, hydrogen and mixtures thereof in any proportions, in a highly oxidizing medium, characterised in that said combustible substance is passed in contact with at least one catalyst comprising a monolithic substrate, a porous support comprising a refractory inorganic oxide and an active phase formed by cerium, iron and at least one noble metal selected from the group formed by palladium and platinum, the content of porous support being between 100 and 400 g per litre of catalyst, the content of cerium being between 0.3 and 20 % by weight with respect to the porous support, the content of iron being between 0.01 and 3.5 % of iron by weight with respect to the porous support and the content of palladium and/or platinum being between 3 and 20 g per litre of catalyst.

2. A process according to claim 1, characterised in that, in said catalyst, the content of porous support is between 200 and 350 g per litre of catalyst, the content of cerium is between 2 and 15 % by weight with respect to the porous support, the content of iron is between 0.1 and 2 % of iron by weight with respect to the support and the content of palladium and/or platinum is between 5 and 15 g per litre of catalyst.

3. A process according to one of claims 1 and 2, characterised in that, in said catalyst, the noble metal is platinum.

4. A process according to one of claims 1 to 3, characterised in that, in said catalyst, the porous support comprising a refractory inorganic oxide is selected from the group formed by alpha alumina, delta alumina, eta alumina, gamma alumina, kappa alumina, khi alumina, rho alumina, theta alumina, silica, silica-aluminas, titanium oxide, zirconia and mixtures thereof.

5. A process according to one of claims 1 to 4, characterised in that, in said catalyst, said porous support has a specific surface area between 20 and 250 m²/g.

6. A process according to one of claims 1 to 5, characterised in that, in said satalyst, the porous support comprising a refractory inorganic oxide is selected from the group formed by alpha alumina, delta alumina, eta alumina, gamma alumina, kappa alumina, khi alumina, rho alumina and theta alumina.

7. A process according to claim 6, characterised in that said support has been thermally stabilised by introduction of at least one compound selected from the group formed by oxides of trivalent rare earths, oxides of alkaline earth metals and silica.

8. A process according to claim 7, characterised in that said support has been thermally stabilised by silica.

9. A process according to claim 8, characterised in that the content of silica is from 1 to 5 % by weight with respect to the porous support.

10. A process according to one of claims 1 to 9, characterised in that, in said catalyst, said monolithic substrate is metallic or ceramic.

11. A process according to claim 10, characterised in that said monolithic substrate has a cell density of from 7.75 to 93 cells per cm².

12. A process according to one of claims 1 to 11, characterised in that it comprises a plurality of catalytic stages of which at least one functions at temperatures of less than 1100°C and uses a catalyst as defined in one of claims 1 to 11.
